# EUROPEAN PATENT APPLICATION

(11) **EP 4 606 598 A1**
(43) Date of publication of application: **27.08.2025**
(21) Application number: 25152600.0
(22) Date of filing: 17.01.2025
(51) Int. Cl.: B60B 7/00, B60B 19/10, B60B 21/12, B60B 3/10, B60B 5/02

(54) **VEHICLE WHEEL STRUCTURE**

(30) Priority: 26.02.2024 JP 2024026723
(71) Applicant: TOYOTA JIDOSHA KABUSHIKI KAISHA, Aichi-ken, 471-8571 (JP)
(72) Inventor: ISHIKAWA, Tomoyuki, Toyota-shi,, 471-8571 (JP)
(74) Representative: J A Kemp LLP

(57) **Abstract**

A vehicle wheel structure (10) includes a wheel (11) and a wheel mounting member (13) configured to be mounted on the wheel (11). The wheel mounting member (13) includes a body portion (131) that is fixed to an inner peripheral surface of an annular rim (112), the annular rim (112) forming the wheel (11) and supporting a tire (12) on an outer peripheral surface of the annular rim (112), fins (132, 133) that are extended along an axial direction (DL) of the body portion (131) on an inner peripheral surface of the body portion (131), and a weir portion (134) that is extended on the inner peripheral surface of the body portion (131) along a circumferential direction of the body portion (131) to block air flowing along the axial direction (DL) in a state in which the wheel mounting member (13) is mounted on the wheel (11) and rotates together with the wheel (11).

## Description

### BACKGROUND OF THE INVENTION

### 1. Field of the Invention

The present disclosure relates to a vehicle wheel structure.

### 2. Description of Related Art

For example, a vehicle wheel and a vehicle tire (hereinafter, simply referred to as a "vehicle wheel and the like") disclosed in Japanese Unexamined Patent Application Publication No. 2004-196005 (JP 2004-196005 A) are known. In the vehicle wheel and the like, a plurality of fins extending over substantially an entire region of a rim in a width direction is provided on an inner peripheral surface of the rim so as to be inclined with respect to the width direction of the rim. As a result, air flows from an inside to an outside of the wheel.

### SUMMARY OF THE INVENTION

Improving aerodynamic characteristics of a traveling vehicle, that is, reducing an air resistance acting on the traveling vehicle is important in improving fuel efficiency or electricity consumption of the vehicle. In the traveling vehicle, in general, a side flow occurs in which air flows from the front to the rear in a front-rear direction along a side surface of the vehicle, and air that has entered below a vehicle body flows out from an inside to an outside of a wheel. Incidentally, the air flowing out from the inside to the outside of the wheel may disturb the side flow, and as a result, the disturbance of the side flow may cause an increase in air resistance. Therefore, suppressing the outflow of the air from the inside to the outside of the wheel is important in reducing the air resistance.

The present disclosure provides a vehicle wheel structure capable of suppressing the outflow of the air from the inside to the outside of the wheel.

A vehicle wheel structure of the present disclosure includes a wheel configured to be mounted on a vehicle, and a wheel mounting member configured to be mounted on the wheel. The wheel mounting member includes a body portion, fins, and a weir portion. The body portion is fixed to an inner peripheral surface of an annular rim, the annular rim forming the wheel and supporting a tire on an outer peripheral surface of the annular rim. The fins are extended along an axial direction of the body portion on an inner peripheral surface of the body portion. The weir portion is extended on the inner peripheral surface of the body portion along a circumferential direction of the body portion to block air flowing along the axial direction in a state in which the wheel mounting member is mounted on the wheel and rotates together with the wheel.

The fins may be disposed in a pair in parallel along the circumferential direction of the body portion.

The weir portion may be extended along the circumferential direction of the body portion to connect the fins to each other.

The weir portion may be extended to connect end portions of the fins on an inner side of the vehicle.

The weir portion may be extended such that the axial direction and an extension direction of the weir portion are orthogonal to each other.

An extension direction in which the fin is extended may be inclined at an angle toward a rotation direction of the body portion with respect to the axial direction of the body portion.

In a state in which the wheel mounting member is mounted on the wheel and rotates together with the wheel, the angle may be set according to a position at which air flowing into the annular rim of the wheel from an inside of the vehicle to an outside of the vehicle flows out of the vehicle in the circumferential direction of the wheel.

The angle may be set according to a rotation speed of the wheel mounting member that generates a pressure for causing the air to flow out of the vehicle due to a centrifugal force generated by rotation.

The angle may be set according to a dimension of an inner diameter of the wheel mounting member that generates a pressure for causing the air to flow out of the vehicle due to a centrifugal force generated by rotation.

The fins may be extended along the axial direction such that extension directions in which the fins are extended are parallel to each other.

At least one of the fins may be extended along the axial direction so as to be curved.

The fins may be extended along the axial direction such that extension directions in which the fins are extended intersect with each other.

The extension directions in which the fins are extended may intersect with each other on an outer side of the vehicle.

A pair of the fins and the weir portion may be configured to lift up the air that has flowed into the annular rim from an inside of the vehicle to an outside of the vehicle downward in a vertical direction of the annular rim such that the air flows out of the vehicle behind the wheel in a front-rear direction of the vehicle with respect to an inflow position of the air, in a state in which the wheel mounting member is mounted on the wheel and rotates together with the wheel.

The fins and the weir portion may be provided to correspond to air holes provided in a disk forming the wheel and may be configured to cause the lifted-up air to flow out of the vehicle via the air holes.

The wheel mounting member may be formed of a resin material.

The vehicle wheel structure of the present disclosure enables the wheel mounting member to suppress the outflow of the air from the inside to the outside of the wheel by the fins and the weir portion. As a result, the vehicle wheel structure can suppress the disturbance of the side flow by the air flowing out from the inside to the outside of the wheel. Accordingly, the vehicle wheel structure can suppress the increase in air resistance acting on the traveling vehicle, and as a result, can contribute to improving the fuel efficiency or electricity consumption of the vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view for describing a vehicle wheel structure according to an embodiment;
FIG. 2 is a cross-sectional view for describing the vehicle wheel structure;
FIG. 3 is a front view for describing a wheel;
FIG. 4 is a rear view for describing the wheel;
FIG. 5 is a front view for describing a wheel mounting member;
FIG. 6 is a rear view for describing the wheel mounting member;
FIG. 7 is a front view for describing a state in which the wheel mounting member is mounted;
FIG. 8 is a rear view for describing a state in which the wheel mounting member is mounted;
FIG. 9 is a cross-sectional view for describing a flow of air when the wheel mounting member is not mounted;
FIG. 10 is a diagram for describing disposition of fins and a weir portion of the wheel mounting member;
FIG. 11 is a diagram for describing air being lifted up and flowing outward by the wheel mounting member;
FIG. 12 is a diagram for describing air being lifted up and flowing rearward by the wheel mounting member;
FIG. 13 is a diagram for describing a wheel mounting member according to a first modification example; and
FIG. 14 is a diagram for describing a wheel mounting member according to a second modification example.

### DETAILED DESCRIPTION OF EMBODIMENTS

Hereinafter, a vehicle wheel structure of the present disclosure will be described in detail with reference to the drawings. The present disclosure can be implemented in various forms in which various modifications and improvements are made based on the knowledge of those skilled in the art in addition to the following embodiment.

### 1. Embodiment

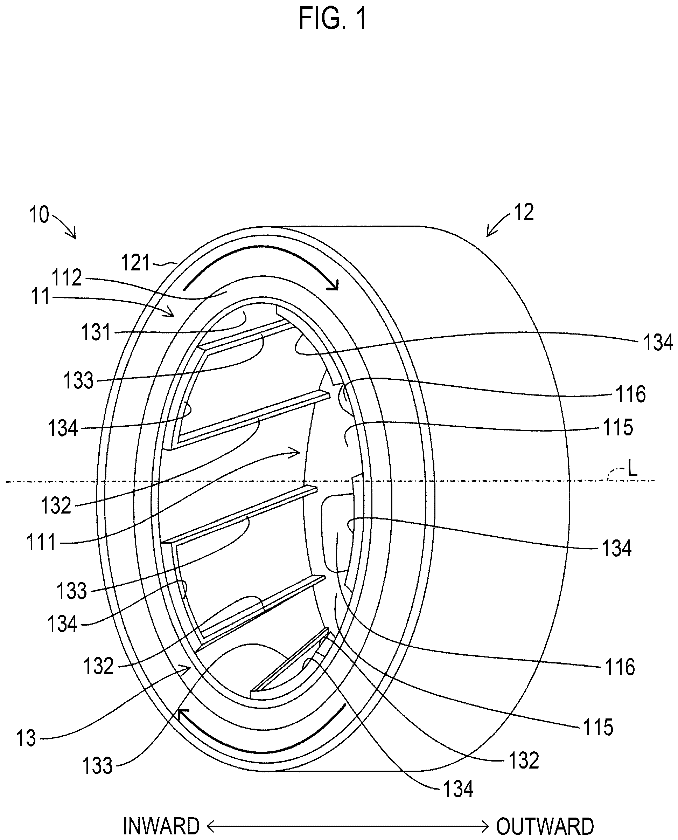

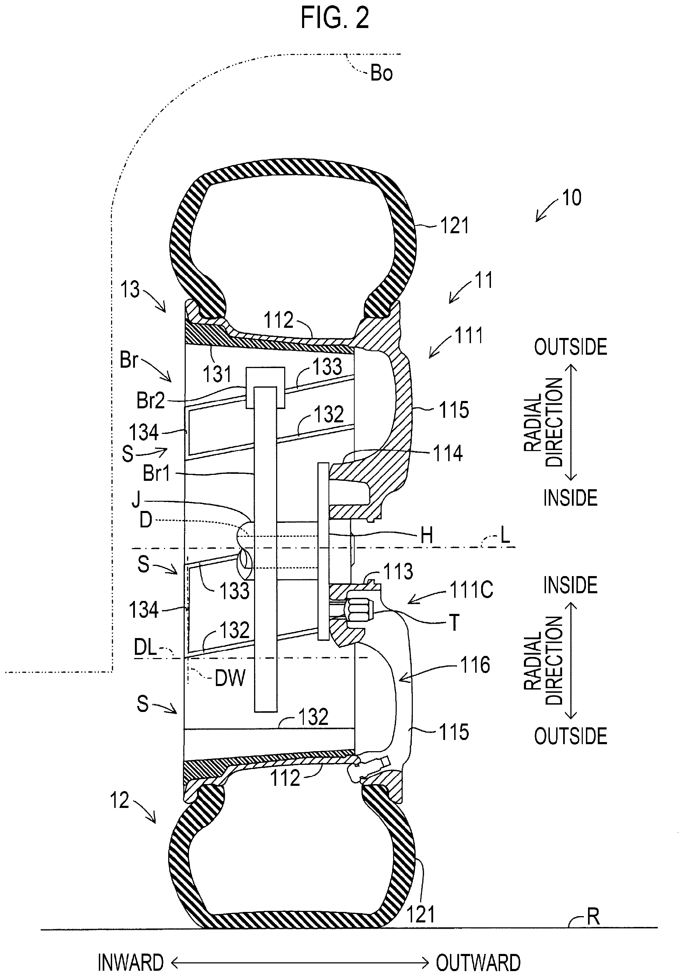

As shown in FIGS. 1 and 2, a vehicle wheel structure 10 of the present embodiment includes a wheel 11 that constitutes a tire-wheel assembly of a vehicle. The wheel 11 supports a tire 12 and is mounted on the vehicle. In addition, the vehicle wheel structure 10 of the present embodiment includes a wheel mounting member 13 configured to be mounted on the wheel 11. Here, the vehicle wheel structure 10 described below is exemplified as being applied to a tire-wheel assembly of a drive wheel. Although the vehicle wheel structure 10 is exemplified as being applied to the tire-wheel assembly of the drive wheel, the vehicle wheel structure 10 can also be applied to a tire-wheel assembly of a driven wheel.

Here, when the wheel 11 is mounted on the vehicle, a side on which a vehicle body Bo (see FIG. 2) of the vehicle is positioned with respect to the wheel 11 is referred to as "inside", and an opposite side on which the vehicle body Bo is not positioned is referred to as "outside". In addition, in the following description, a direction DL parallel to a rotation axis L passing through a center of the tire-wheel assembly including the wheel 11 and the wheel mounting member 13 is referred to as an "axial direction DL". In addition, in the following description, a direction orthogonal to the rotation axis L is referred to as a "radial direction". Further, in the following description, a direction along the front and rear of the vehicle is referred to as a "front-rear direction".

The wheel 11 is made of an alloy, such as aluminum, or is made of steel, and is configured to include a disk 111 formed in a circular shape and a rim 112 that is provided in an annular shape on an outer periphery of the disk 111 and that holds the tire 12 on an outer peripheral surface of the rim 112. In the present embodiment, the wheel 11 is made of an alloy, such as aluminum, and as shown in FIG. 2, a case is exemplified in which the wheel 11 is a one-piece type in which the disk 111 and the rim 112 are integrally formed.

As shown in FIGS. 2, 3, and 4, the disk 111 has a hub hole 113 that is formed to extend along the rotation axis L and to penetrate a center portion 111C of the disk 111. Here, the hub hole 113 has a protrusion formed along a circumferential direction of an inner peripheral surface, and can function, for example, as a hole for attaching an ornament to the wheel 11 or as a hole for fixing a wheel cover (not shown) by engaging a claw member provided on the wheel cover with the protrusion when the wheel cover is mounted.

In addition, the disk 111 includes a hub attachment portion 114 that is fixed to a hub H by a fastening member T, such as a hub nut or a hub bolt, when the wheel 11 is mounted on the vehicle, on an inner side. The hub attachment portion 114 is provided at the center portion 111C of the disk 111.

In addition, the disk 111 includes spokes 115 that connect the hub attachment portion 114 and the rim 112. In the present embodiment, a case is exemplified in which the disk 111, that is, the wheel 11 includes five spokes 115 that radially extend from the hub attachment portion 114 toward the rim 112 in a radial direction.

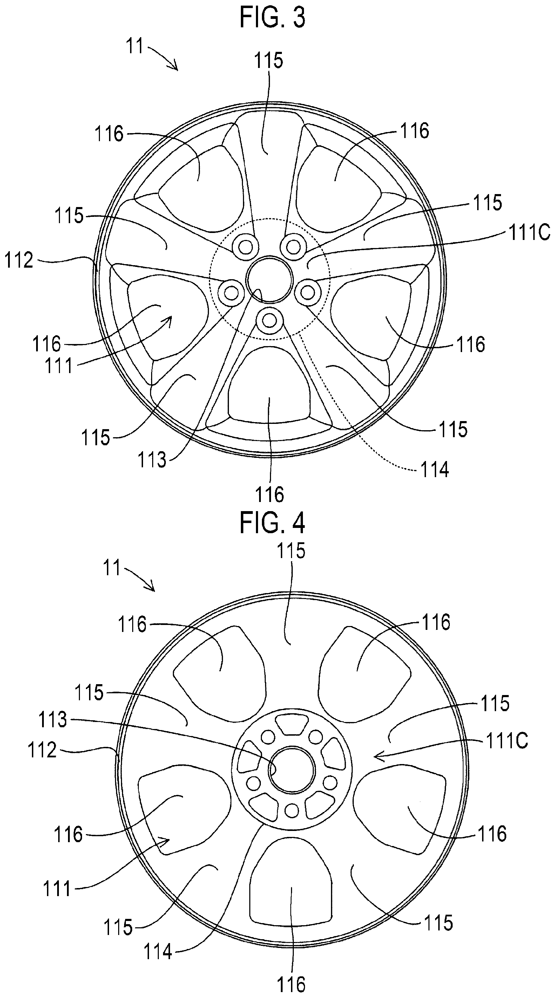

In addition, the disk 111 has air holes 116 formed between the spokes 115 adjacent to each other. In the present embodiment, as shown in FIGS. 3 and 4, a case is exemplified in which the disk 111 has five air holes 116 and each air hole 116 is defined by two spokes 115, the hub attachment portion 114, and the rim 112. The air hole 116 may be defined by, for example, two spokes 115 and the rim 112, or may be defined by two spokes 115 and the hub attachment portion 114, depending on the disposition and shape of the spokes 115.

Here, as shown in FIG. 2, a disc brake Br is provided on the inside of the wheel 11, more specifically, on the inside of the hub H connected to the hub attachment portion 114. The disc brake Br includes a brake rotating body Br1 that rotates integrally with the wheel 11 and a caliper Br2 that presses a friction member against the brake rotating body Br1. In the present embodiment, a case is exemplified in which the disc brake Br is provided, but a drum brake may be provided.

As shown in FIGS. 1 and 2, the wheel mounting member 13 constituting the vehicle wheel structure 10 is fixed to an inner peripheral surface of the rim 112 of the wheel 11 and is mounted on the wheel 11. The wheel mounting member 13 includes a body portion 131, a fin 132, a fin 133, and a weir portion 134. Here, the wheel mounting member 13 is formed of, for example, a resin material.

In the present embodiment, the body portion 131 is formed into a cylindrical shape so as to be inserted into the rim 112 of the wheel 11 and fixed to the inner peripheral surface of the rim 112. A length of the body portion 131 in the axial direction DL is set to be substantially the same as a width of the rim 112 (see FIG. 2). Here, an outer peripheral surface of the body portion 131 is formed to correspond to, for example, a step formed on the inner peripheral surface of the rim 112. As a result, the wheel mounting member 13 is mounted by engaging the step provided on the inner peripheral surface of the rim 112 with the outer peripheral surface of the body portion 131.

The fins 132, 133 are provided to be disposed in a pair in parallel along the circumferential direction on an inner peripheral surface of the body portion 131. The fins 132, 133 are extended along the axial direction DL of the body portion 131. The extension of the fins 132, 133 will be described in detail below.

The weir portion 134 is extended on the inner peripheral surface of the body portion 131 along the circumferential direction of the body portion 131 to block air flowing inside the rim 112 along the axial direction DL in a state in which the wheel mounting member 13 is mounted on the wheel 11 and rotates together with the wheel 11. Here, the weir portion 134 of the present embodiment is extended along the circumferential direction to connect the fins 132, 133 to each other, more specifically, to connect end portions of the fins 132, 133 on the inner side of the vehicle. Further, as shown in FIG. 2, the weir portion 134 of the present embodiment is extended such that the axial direction DL and an extension direction DW are orthogonal to each other.

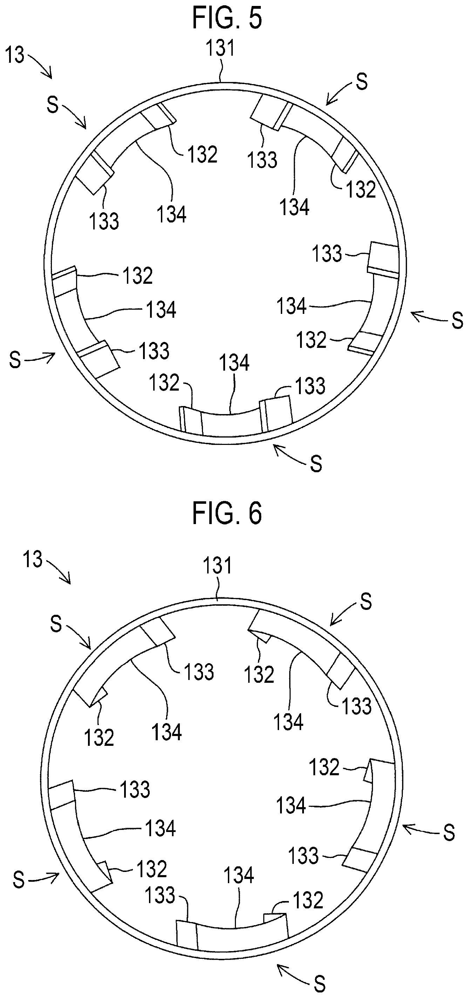

In the present embodiment, five structures S each including the fins 132, 133 and one weir portion 134 are provided along the circumferential direction of the body portion 131, as shown in FIGS. 5 and 6. That is, in the present embodiment, a case is exemplified in which the structures S of which the number is the same as the five air holes 116 provided in the disk 111 of the wheel 11 are provided. The number of the structures S including the fins 132, 133 and the weir portion 134 is not limited to the above, and more structures S than the number of the air holes 116 or fewer structures S than the number of the air holes 116 can be provided.

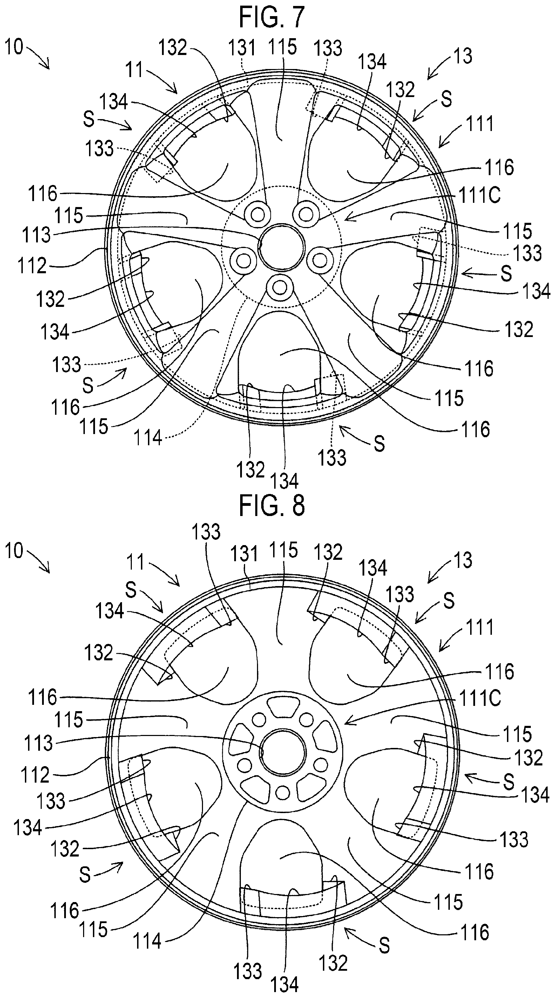

As described above, in the vehicle wheel structure 10 of the present embodiment, the wheel mounting member 13 includes the structures S of which the number is the same as the air holes 116. As a result, as shown in FIGS. 7 and 8, when the wheel mounting member 13 is mounted on the wheel 11, the structure S can be disposed to correspond to each of the air holes 116.

Specifically, in a state in which the wheel mounting member 13 is mounted on the wheel 11, the weir portion 134 is disposed at a position shifted in the circumferential direction with respect to the air hole 116. The fins 132, 133 of which respective inner-side end portions are connected to each other by the weir portion 134 are disposed such that respective outer-side end portions coincide with the air hole 116. As a result, the vehicle wheel structure 10 can cause air that has flowed into the rim 112 to flow out of the vehicle from the structure S via the air hole 116. Hereinafter, the outflow of the air to the outside of the vehicle by the structure S will be described.

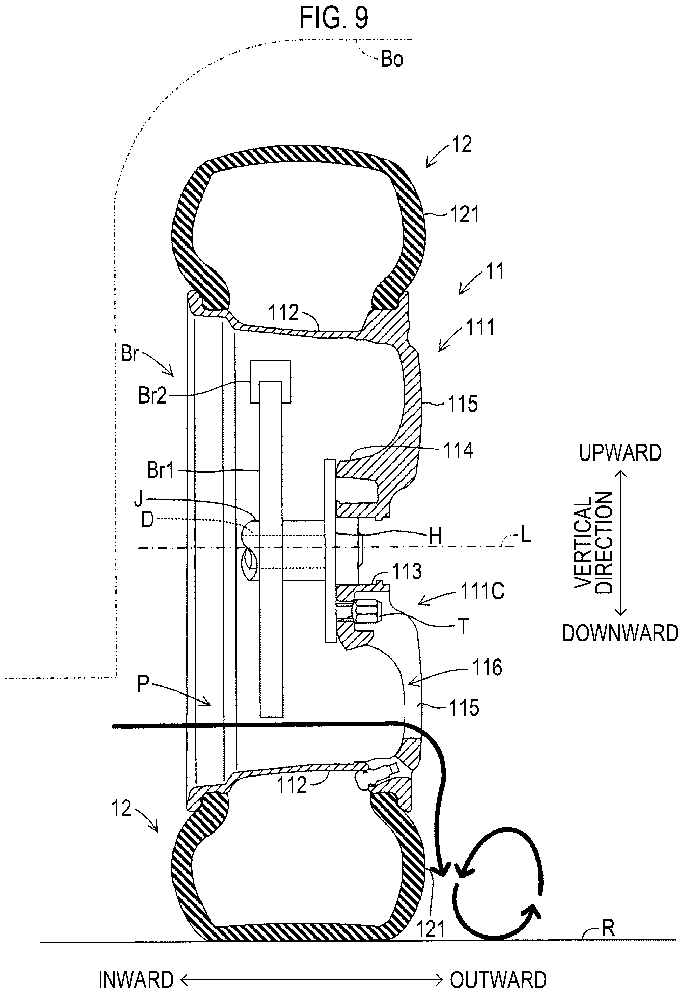

When the vehicle travels, as shown in FIG. 9, air that enters under a floor of the vehicle body Bo from the front in the front-rear direction is compressed in a space with a road surface R, and a part of the air flows from the inside to the outside of the tire-wheel assembly. In addition, as described above, the brake rotating body Br1 of the disc brake Br is disposed on the inside of the wheel 11. As a result, the air flowing under the floor of the vehicle body and flowing from the inside to the outside of the tire-wheel assembly needs to pass below the brake rotating body Br1 in the vertical direction, so that most of the air flows inside the rim 112 downward in the vertical direction.

In this case, in the wheel 11 on which the wheel mounting member 13 is not mounted, as indicated by an arrow of a thick solid line in FIG. 9, the air flowing from the inside to the outside downward in the vertical direction of the rim 112 passes through the air hole 116 forcefully, and the air that has passed through the air hole 116 flows along a sidewall 121 of the tire 12. In addition, when the vehicle travels, a horseshoe-shaped vortex (so-called horseshoe vortex) may be formed due to the fact that the tire 12 pushes air on the road surface to the right and left, as indicated by the arrow of the thick solid line in FIG. 9. In this case, the air that passes through the air hole 116 and flows along the sidewall 121 of the tire 12 may promote the horseshoe vortex.

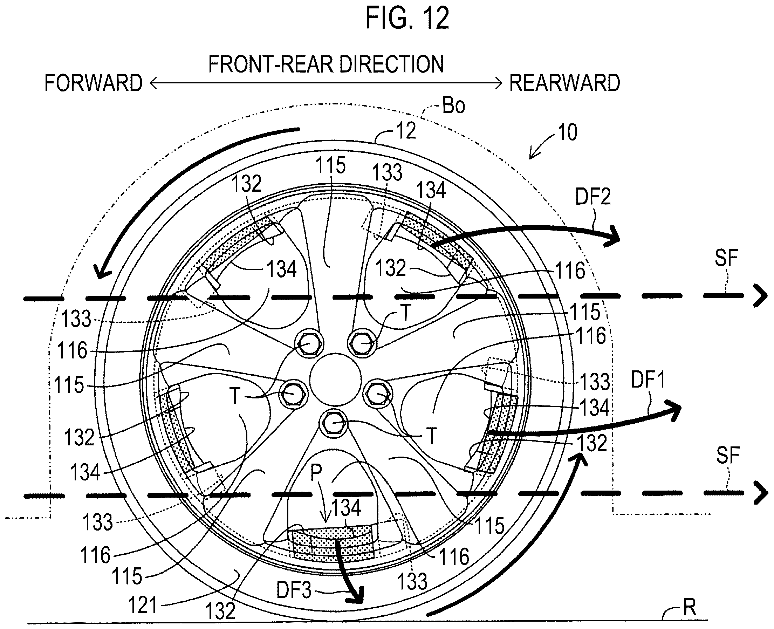

In this case, the horseshoe vortex that is promoted by the outflow of the air via the air hole 116 may increase an air resistance by interfering with a side flow SF (see FIG. 12) that flows along a side surface of the traveling vehicle. Accordingly, in order to suppress the promotion of the horseshoe vortex, there is a need to reduce the amount of air that flows out forcefully via the air hole 116 downward in the vertical direction of the rim 112.

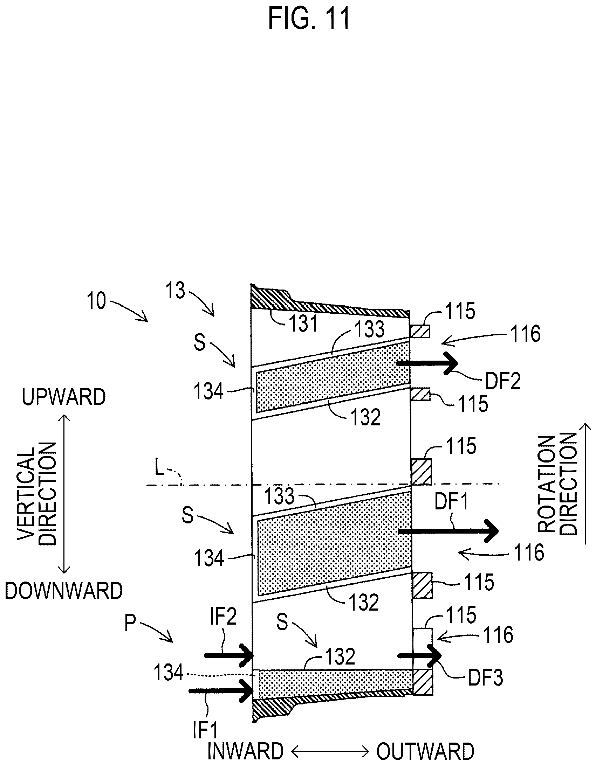

Therefore, the fins 132, 133 and the weir portion 134, that is, the structure S lifts up the air that has flowed into the rim 112 from the inside of the vehicle to the outside of the vehicle downward in the vertical direction of the rim 112 such that the air flows out of the vehicle behind the wheel 11 in the front-rear direction of the vehicle with respect to an inflow position P of the air, in a state in which the wheel mounting member 13 is mounted on the wheel 11 and rotates together with the wheel 11 (see FIGS. 11 and 12). Here, in the present embodiment, as described above, the structure S is provided to correspond to the air hole 116 provided in the disk 111.

Therefore, the structure S including the fins 132, 133 and the weir portion 134 causes the lifted-up air to flow out of the vehicle via the air hole 116 that has moved together with the structure S to be positioned rearward of the inflow position P as a result of the rotation of the wheel 11. As described above, the wheel mounting member 13 causes the air to flow out rearward of the wheel 11, thereby reducing the amount of air that flows out forcefully via the air hole 116 downward in the vertical direction of the rim 112, and as a result, the promotion of the formation of the horseshoe vortex can be suppressed.

Incidentally, in order for the structure S to cause the air to flow out via the air hole 116 behind the wheel 11, the structure S that rotates together with the wheel 11 needs to guide the air rearward in the front-rear direction with respect to the inflow position P of the air. That is, when the fins 132, 133 are extended from the weir portion 134 in the body portion 131, the fins 132, 133 need to be extended such that the air hole 116 behind the lower inflow position P in the vertical direction of the rim 112 is in a position to allow air to flow out in a state in which the wheel mounting member 13 is mounted on the wheel 11.

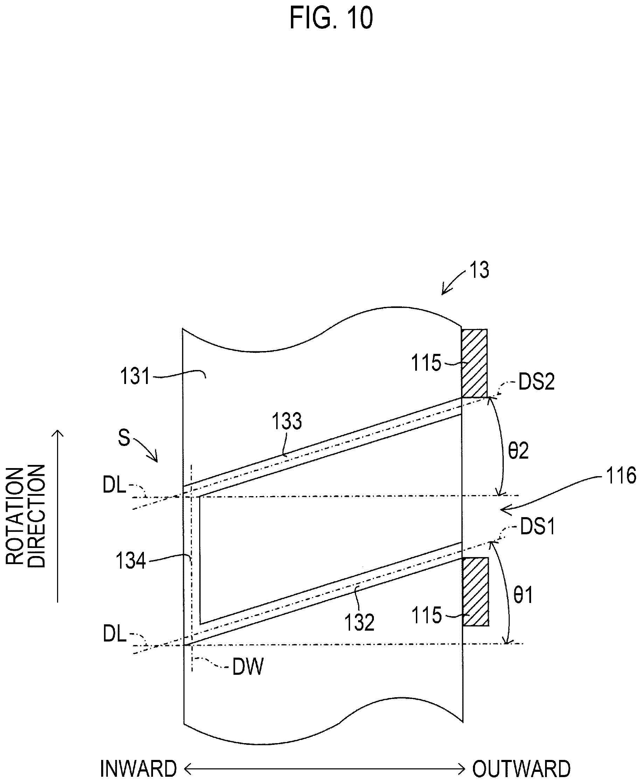

Therefore, as shown in FIG. 10, an extension direction DS1 of the fin 132 of which the inner-side end portion is connected to the weir portion 134 having the extension direction DW orthogonal to the axial direction DL is inclined at an angle θ1 toward the rotation direction of the body portion 131 (the wheel 11) with respect to the axial direction DL. In addition, an extension direction DS2 of the fin 133 of which the inner-side end portion is connected to the weir portion 134 having the extension direction DW orthogonal to the axial direction DL is inclined at an angle θ2 toward the rotation direction of the body portion 131 (the wheel 11) with respect to the axial direction DL. Here, in the present embodiment, a case is exemplified in which the fins 132, 133 are extended along the axial direction DL such that the fins 132, 133 are parallel to each other. Accordingly, in the following description, a case is exemplified in which the angle θ1 and the angle θ2 are the same angle θ. The angle θ1 and angle θ2 can be set to be different from each other.

As described above, the angle θ (the angle θ1 and the angle θ2) is set according to the air hole 116, that is, according to a position at which the air flowing into the rim 112 of the wheel 11 from the inside of the vehicle to the outside of the vehicle flows out of the vehicle in the circumferential direction of the wheel 11 in a state in which the wheel mounting member 13 is mounted on the wheel 11 and rotates together with the wheel 11. That is, the angle θ is set to a larger value as the position of the air hole 116 through which the air surrounded by the structure S flows out is farther away from the inflow position P, in other words, as the position of the weir portion 134 is shifted relative to the air hole 116.

Incidentally, in order to cause the air surrounded by the structure S to flow outward, there is a need to apply a pressure to the air. As described above, the wheel mounting member 13 can lift up the air that has flowed into the rim 112 of the wheel 11 via the structure S, so that the lifted-up air rotates together with the wheel 11 and the wheel mounting member 13. Therefore, a centrifugal force acts on the lifted-up air, and the air is compressed in a space with the inner peripheral surface of the body portion 131. As a result, a pressure due to the compression is generated in the air rotating inside the body portion 131.

In this case, when the pressure due to the compression is generated, the air surrounded by the structure S is guided toward the air hole 116 by the fins 132, 133 and flows outward by receiving a reaction force from the weir portion 134. Here, the centrifugal force acting on the air that has flowed into the wheel 11, that is, the wheel mounting member 13, increases as a rotation speed and a rotation radius of the lifted-up air increase. In addition, as the centrifugal force is larger, the pressure that is generated in the air is larger, and the air can flow to the air hole 116 located away from the inflow position P while being guided by the fins 132, 133.

Accordingly, the angle θ is set according to a rotation speed of the wheel mounting member 13 that generates the pressure for causing the air to flow out of the vehicle due to the centrifugal force generated by the rotation in a state in which the wheel mounting member 13 is mounted on the wheel 11 and rotates together with the wheel 11. That is, the angle θ can be set to a larger value as the rotation speed of the wheel 11 corresponding to a vehicle speed at which the air resistance acting on the traveling vehicle is to be reduced increases. As a result, the position of the air hole 116 through which the air surrounded by the structure S flows out can be separated from the inflow position P, and the promotion of the horseshoe vortex can be suppressed.

In addition, as described above, the angle θ is set according to a dimension of an inner diameter of the wheel mounting member 13 (the body portion 131) that generates the pressure for causing the air to flow out of the vehicle due to the centrifugal force generated by the rotation in a state in which the wheel mounting member 13 is mounted on the wheel 11 and rotates together with the wheel 11. That is, the angle θ can be set to a larger value as the inner diameter of the wheel mounting member 13 increases when the wheel mounting member 13 is mounted on the wheel 11 having a large diameter. As a result, the position of the air hole 116 through which the air surrounded by the structure S flows out can be separated from the inflow position P, and the promotion of the formation of the horseshoe vortex can be suppressed.

Then, in the vehicle wheel structure 10 formed as described above, as shown in FIGS. 11 and 12, first, at the inflow position P, the weir portion 134 of the structure S mainly blocks an inflow IF1 of the air from inside the vehicle. When the angle θ is large, for example, the fin 133 also blocks the inflow IF1 of the air in addition to the weir portion 134. As a result, an inflow IF2 of the air that is not blocked by the weir portion 134 passes through the air hole 116 as it is, and becomes an outflow DF3 to the outside of the vehicle. Here, the outflow DF3 is caused by the inflow IF2 that is a part of the air flowing in at the inflow position P. However, the inflow IF1 that occupies most of the air flowing in at the inflow position P is blocked by the weir portion 134 (and the fin 133). In addition, most of the inflow IF2 is pressed against the inner peripheral surface of the body portion 131 and is lifted up due to the rotational motion applied in the rotation direction of the wheel 11 while passing through the inside of the body portion 131 (the wheel 11). Accordingly, the outflow DF3 is less than when the wheel mounting member 13 is not mounted, and the promotion of the formation of the horseshoe vortex can be suppressed.

In addition, as shown in FIGS. 11 and 12 by dots, the air surrounded by the structure S at the inflow position P is lifted up as the wheel 11 and the wheel mounting member 13 rotate, and moves to the rear side of the wheel 11 in the front-rear direction. In this way, the air surrounded by the structure S moves with rotation, so that the pressure due to the action of the centrifugal force is generated in the air. As a result, the air that has moved rearward of the wheel 11 becomes outflow DF1 and outflow DF2 to the outside of the vehicle via the air hole 116 as shown in FIG. 11. In addition, as shown in FIG. 12, the outflow DF1 and the outflow DF2 flow rearward in the front-rear direction along the side flow SF.

As can be understood from the above description, the vehicle wheel structure 10 of the embodiment includes the wheel 11 configured to be mounted on the vehicle, and the wheel mounting member 13 configured to be mounted on the wheel 11. The wheel mounting member 13 includes the body portion 131 that is fixed to the inner peripheral surface of the annular rim 112 forming the wheel 11 and supporting the tire 12 on the outer peripheral surface of the rim 112, the fins 132, 133 that are extended along the axial direction DL of the body portion 131 on the inner peripheral surface of the body portion 131, and that are disposed in a pair in parallel along the circumferential direction of the body portion 131, and the weir portion 134 that is extended on the inner peripheral surface of the body portion 131 along the circumferential direction of the body portion 131 to block air flowing along the axial direction DL in a state in which the wheel mounting member 13 is mounted on the wheel 11 and rotates together with the wheel 11. In this case, the wheel mounting member 13 is formed of a resin material.

In this case, the weir portion 134 is extended along the circumferential direction of the body portion 131 to connect the fins 132, 133 to each other. In this case, the weir portion 134 is extended to connect end portions of the fins 132, 133 on the inner side of the vehicle.

In addition, in this case, the weir portion 134 is extended such that the axial direction DL and the extension direction DW of the weir portion 134 are orthogonal to each other.

In addition, in this case, the extension directions DS1, DS2 in which the fins 132, 133 are extended are respectively inclined at the angle θ1 and the angle θ2 toward the rotation direction of the body portion 131 with respect to the axial direction DL of the body portion 131. In this case, the angle θ1 and the angle θ2 are set according to the air hole 116 as the position at which the air flowing into the rim 112 of the wheel 11 from the inside of the vehicle to the outside of the vehicle flows out of the vehicle in the circumferential direction of the wheel 11 in a state in which the wheel mounting member 13 is mounted on the wheel 11 and rotates together with the wheel 11. In this case, the angle θ1 and the angle θ2 are set according to the rotation speed of the wheel mounting member 13 that generates the pressure for causing the air to flow out of the vehicle due to the centrifugal force generated by rotation. In addition, in this case, the angle θ1 and the angle θ2 are set according to the dimension of the inner diameter of the wheel mounting member 13 that generates the pressure for causing the air to flow out of the vehicle due to the centrifugal force generated by rotation.

In addition, in this case, the fins 132, 133 are extended along the axial direction DL such that the extension directions DS1, DS2 in which the fins 132, 133 are extended are parallel to each other.

In addition, in these cases, the fins 132, 133 and the weir portion 134 lift up the air that has flowed into the rim 112 from the inside of the vehicle to the outside of the vehicle downward in the vertical direction of the rim 112 such that the air flows out of the vehicle behind the wheel 11 in the front-rear direction of the vehicle with respect to the inflow position P of the air, in a state in which the wheel mounting member 13 is mounted on the wheel 11 and rotates together with the wheel 11. In this case, the fins 132, 133 and the weir portion 134 are provided to correspond to the air holes 116 provided in the circular disk 111 forming the wheel 11 and are configured to cause the lifted-up air to flow out of the vehicle via the air holes 116.

The vehicle wheel structure 10 enables the wheel mounting member 13 to suppress the outflow of the air from the inside to the outside of the wheel 11 by means of the fins 132, 133 and the weir portion 134. As a result, the vehicle wheel structure 10 can suppress the disturbance of the side flow SF by the outflow DF3 that is the air flowing out from the inside to the outside of the wheel 11. Accordingly, the vehicle wheel structure 10 can suppress the increase in air resistance acting on the traveling vehicle, and as a result, can contribute to improving the fuel efficiency or electricity consumption of the vehicle.

In addition, in the vehicle wheel structure 10, the wheel mounting member 13 is formed of a resin material different from the wheel 11 as a separate member. Then, in the vehicle wheel structure 10, the wheel mounting member 13 is inserted from the inner side to the outer side of the wheel 11 and fixed to the inner peripheral surface of the rim 112, whereby the wheel mounting member 13 is mounted on the wheel 11. As a result, the wheel mounting member 13 having the fins 132, 133 and the weir portion 134, that is, the structure S, can be manufactured at low cost, and there is no need to provide a fixing member for fixing the wheel mounting member 13 to the wheel 11, so that an increase in manufacturing cost of the wheel 11 can be suppressed.

### 2. First Modification Example

In the above-described embodiment, a case in which the extension directions DS1, DS2 of the fins 132, 133 are parallel to each other has been exemplified. In addition, in the above-described embodiment, a case in which the shape of each of the fins 132, 133 is a linear shape has been exemplified.

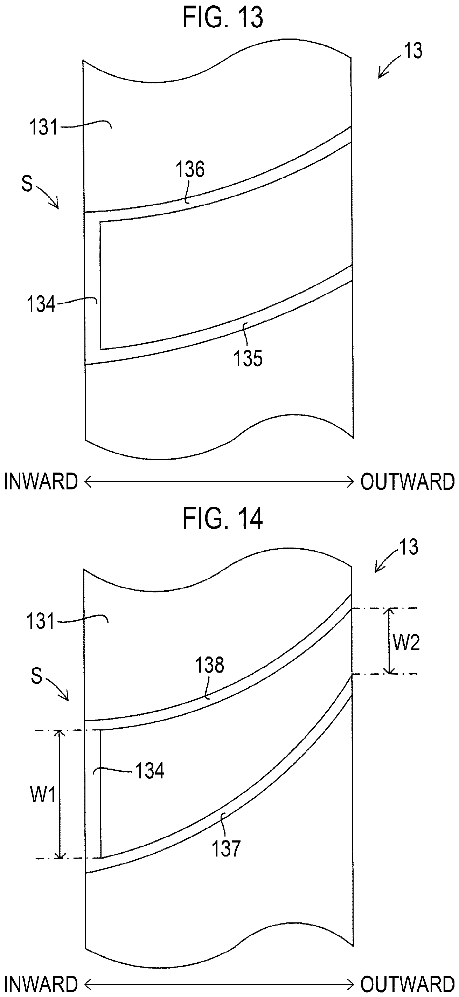

The shapes of the fins 132, 133 provided on the inner peripheral surface of the body portion 131 are not limited to the linear shape, and as shown in FIG. 13, shapes of a pair of fins 135, 136 may be a curved shape. In this case, both the fins 135, 136 may have a curved shape, or one of the fins 135, 136 may have a linear shape as exemplified in the above embodiment and the other may have a curved shape. In addition, in this case, as shown in FIG. 13, both the fins 135, 136 may have a curved shape parallel to each other.

That is, in a first modification example, at least one of the fins 135, 136 is extended along the axial direction DL so as to be curved. In the first modification example, as in the above-described embodiment, the wheel mounting member 13 can lift up the air that has flowed into the rim 112 by the fins 135, 136 and the weir portion 134, and can cause the lifted-up air to flow outward behind the wheel 11. Accordingly, in the first modification example as well, the outflow of the air from the inside to the outside of the wheel 11 can be suppressed, and the same effect as the effect of the above-described embodiment can be obtained.

### 3. Second Modification Example

In the above-described embodiment, a case in which the extension directions DS1, DS2 of the fins 132, 133 are parallel to each other has been exemplified. In addition, in the above-described embodiment, a case in which the shape of each of the fins 132, 133 is a linear shape has been exemplified.

Incidentally, the shapes of the fins 132, 133 provided on the inner peripheral surface of the body portion 131 are not limited to the linear shapes parallel to each other, and as shown in FIG. 14, shapes of a pair of fins 137, 138 are not be parallel to each other, that is, the shapes may be curved shapes in which extension directions of the fins 137, 138 intersect with each other. In this case, since the shapes of the fins 137, 138 have curved shapes that are not parallel to each other, for example, an interval W2 along the circumferential direction of the fins 137, 138 on the outer side can be made smaller than an interval W1 along the circumferential direction of the fins 137, 138 on the weir portion 134 side, that is, the inner side. That is, in this case, the extension directions of the fins 137, 138 intersect with each other on the outer side of the vehicle.

As a result, when the centrifugal force acts on the air surrounded by the structure S including the fins 137, 138 and the weir portion 134,the pressure generated in the surrounded air can be increased early by narrowing the interval W2 on the side from which the air flows out. Accordingly, in a second modification example, the air surrounded by the structure S can flow out by being guided by the fins 137, 138 to the air hole 116 farther away from the inflow position P.

In the second modification example, as in the above-described embodiment, the wheel mounting member 13 can lift up the air that has flowed into the rim 112 by the fins 137, 138 and the weir portion 134, and can cause the lifted-up air to flow outward behind the wheel 11. Accordingly, in the second modification example as well, the outflow of the air from the inside to the outside of the wheel 11 can be suppressed, and the same effect as the effect of the above-described embodiment can be obtained.

### 4. Other Modification Examples

In the above-described embodiment, a case in which the weir portion 134 connects the inner-side end portions of the fins 132, 133 has been exemplified, and in the above-described modification examples, a case in which the weir portion 134 connects the inner-side end portions of the fins 135, 136 and a case in which the weir portion 134 connects the inner-side end portions of the fins 137, 138 have been exemplified. That is, in the above-described embodiment and modification examples, a case in which the weir portion 134 is disposed at the end portion on the inner side of the body portion 131 (the rim 112) has been exemplified.

Incidentally, the disposition of the weir portion 134 is not limited to being disposed at the end portions on the inner side of the fins 132, 133, that is, at the end portion on the inner side of the body portion 131, and for example, the weir portion 134 can be disposed in a central portion of the fins 132, 133, that is, in a central portion along the axial direction DL of the body portion 131. In this case as well, the weir portion 134 can block the air flowing along the axial direction DL, that is, the air flowing from the inside to the outside or the air flowing from the outside to the inside in a state in which the wheel mounting member 13 is mounted on the wheel 11 and rotates together with the wheel 11, so that the same effects as effects of the above-described embodiment and modification examples can be obtained.

In addition, in the above-described embodiment, a case has been exemplified in which five weir portion 134 are provided at equal intervals in the circumferential direction of the body portion 131 to connect the fins 132, 133. However, the weir portions 134 are not limited to being provided at equal intervals on the body portion 131, and can be provided, for example, in an annular shape along the circumferential direction of the body portion 131. In this case, since the structures S adjacent to each other are also connected by the weir portion 134, the air flowing from the inside to the outside can be particularly well blocked. Accordingly, in this case as well, the same effects as those of the above-described embodiment and modification examples can be obtained.

In addition, in the above-described embodiment and modification examples, a case in which the weir portion 134 connects the fins 132, 133 has been exemplified. However, the weir portion 134 does not necessarily have to connect the fins 132, 133, and for example, the weir portion 134 may be provided between the fins 132, 133 without connecting the fins 132, 133, or may be provided to be connected to solely one of the fins 132, 133. Also in this case, the weir portion 134 can lift up the air flowing along the axial direction DL, so that the same effects as effects of the above-described embodiment and modification examples can be obtained.

In addition, in the above-described embodiment and modification examples, a case has been exemplified in which the weir portion 134 is extended such that the axial direction DL and the extension direction DW of the weir portion 134 are orthogonal to each other. However, the disposition of the weir portion 134 is not limited to the case in which the weir portion 134 is disposed such that the axial direction DL and the extension direction DW are orthogonal to each other, and for example, the weir portion 134 may be disposed such that the axial direction DL and the extension direction DW form an acute or obtuse angle. In addition, in the above-described embodiment and modification examples, a case in which the weir portion 134 is provided in a linear shape has been exemplified. However, the shape of the weir portion 134 is not limited to a linear shape, and may be, for example, an arc shape (curved shape). Also in these cases, the weir portion 134 can lift up the air flowing along the axial direction DL, so that the same effects as effects of the above-described embodiment and modification examples can be obtained.

In addition, in the above embodiment and modification examples, a case has been exemplified in which the same structure S in which the fins 132, 133 are parallel, curved, or intersecting is provided on the inner peripheral surface of the body portion 131. However, as needed, for example, the structure S in which the shapes of the fins 132, 133 are different can be provided on the inner peripheral surface of the body portion 131.

In addition, in the above-described embodiment, a case in which the wheel mounting member 13 includes the fins 132, 133 has been exemplified, and in the above-described modification examples, a case in which the wheel mounting member 13 includes the fins 135, 136 and a case in which the wheel mounting member 13 includes the fins 137, 138 have been exemplified. However, the wheel mounting member 13 may have solely one of the fins 132, 133, solely one of the fins 135, 136, and solely one of the fins 137, 138.

In this case, the wheel mounting member 13 desirably includes the fins 132, 135, 137 on the rear side in the rotation direction of the wheel mounting member 13 mounted on the wheel 11, together with the weir portion 134, as the structure S. Further, the wheel mounting member 13 desirably includes the fins 132, 135, 137 on the rear side in the rotation direction of the wheel mounting member 13 mounted on the wheel 11, together with the weir portion 134 provided in an annular shape along the circumferential direction of the body portion 131. As described above, even when solely one of the fins 132, 135, 137 is provided, the air can be lifted up, so that the same effects as effects of the above-described embodiment and modification examples can be obtained.

Further, in the above-described embodiment and modification examples, a case in which the body portion 131 of the wheel mounting member 13 is a single cylindrical shape has been exemplified. However, the body portion 131 may also be configured to be divided along the axial direction DL. In this case, the divided members can be fixed to the inner peripheral surface of the annular rim 112 to configure the body portion 131 having a cylindrical shape.

Here, a vehicle wheel structure according to a first aspect of the present disclosure includes a wheel configured to be mounted on a vehicle, and a wheel mounting member configured to be mounted on the wheel. The wheel mounting member includes a body portion, a pair of fins, and a weir portion. The body portion is fixed to an inner peripheral surface of an annular rim forming the wheel and supporting a tire on an outer peripheral surface of the rim. The fins are extended along an axial direction of the body portion on an inner peripheral surface of the body portion, and are disposed in a pair in parallel along a circumferential direction of the body portion. The weir portion is extended on the inner peripheral surface of the body portion along the circumferential direction of the body portion to block air flowing along the axial direction in a state in which the wheel mounting member is mounted on the wheel and rotates together with the wheel.

In addition, a second aspect of the present disclosure provides the vehicle wheel structure according to the first aspect, in which the fins are disposed in a pair in parallel along the circumferential direction of the body portion.

In addition, a third aspect of the present disclosure provides the vehicle wheel structure according to the second aspect, in which the weir portion is extended along the circumferential direction of the body portion to connect the fins to each other.

In addition, a fourth aspect of the present disclosure provides the vehicle wheel structure according to the third aspect, in which the weir portion is extended to connect end portions of the fins on an inner side of the vehicle.

In addition, a fifth aspect of the present disclosure provides the vehicle wheel structure according to any one of the first to fourth aspects, in which the weir portion is extended such that the axial direction and an extension direction of the weir portion are orthogonal to each other.

In addition, a sixth aspect of the present disclosure provides the vehicle wheel structure according to any one of the first to fifth aspects, in which an extension direction in which the fin is extended is inclined at an angle toward a rotation direction of the body portion with respect to the axial direction of the body portion.

In addition, a seventh aspect of the present disclosure provides the vehicle wheel structure according to the sixth aspect, in which, in a state in which the wheel mounting member is mounted on the wheel and rotates together with the wheel, the angle is set according to a position at which air flowing into the rim of the wheel from an inside of the vehicle to an outside of the vehicle flows out of the vehicle in the circumferential direction of the wheel.

In addition, an eighth aspect of the present disclosure provides the vehicle wheel structure according to the seventh aspect, in which the angle is set according to a rotation speed of the wheel mounting member that generates a pressure for causing the air to flow out of the vehicle due to a centrifugal force generated by rotation.

In addition, a ninth aspect of the present disclosure provides the vehicle wheel structure according to the seventh aspect, in which the angle is set according to a dimension of an inner diameter of the wheel mounting member that generates a pressure for causing the air to flow out of the vehicle due to a centrifugal force generated by rotation.

In addition, a tenth aspect of the present disclosure provides the vehicle wheel structure according to any one of the second to ninth aspects, in which the fins are extended along the axial direction such that extension directions in which the fins are extended are parallel to each other.

In addition, an eleventh aspect of the present disclosure provides the vehicle wheel structure according to any one of the second to ninth aspects, in which at least one of the fins is extended along the axial direction so as to be curved.

In addition, a twelfth aspect of the present disclosure provides the vehicle wheel structure according to any one of the second to ninth aspects, in which the fins are extended along the axial direction such that extension directions in which the fins are extended intersect with each other.

In addition, a thirteenth aspect of the present disclosure provides the vehicle wheel structure according to the twelfth aspect, in which the extension directions in which the fins are extended intersect with each other on an outer side of the vehicle.

In addition, a fourteenth aspect of the present disclosure provides the vehicle wheel structure according to any one of first to thirteenth aspects, in which a pair of the fins and the weir portion are configured to lift up the air that has flowed into the rim from an inside of the vehicle to an outside of the vehicle downward in a vertical direction of the rim such that the air flows out of the vehicle behind the wheel in a front-rear direction of the vehicle with respect to an inflow position of the air, in a state in which the wheel mounting member is mounted on the wheel and rotates together with the wheel.

In addition, a fifteenth aspect of the present disclosure provides the vehicle wheel structure according to the fourteenth aspect, in which the fins and the weir portion are provided to correspond to air holes provided in a disk forming the wheel and are configured to cause the lifted-up air to flow out of the vehicle via the air holes.

In addition, a sixteenth aspect of the present disclosure provides the vehicle wheel structure according to any one of the first to fifteenth aspects, in which the wheel mounting member is formed of a resin material.

## Claims

1. A vehicle wheel structure (10) comprising:
a wheel (11) configured to be mounted on a vehicle; and
a wheel mounting member (13) configured to be mounted on the wheel (11),
wherein the wheel mounting member (13) includes
a body portion (131) that is fixed to an inner peripheral surface of an annular rim (112), the annular rim (112) forming the wheel (11) and supporting a tire (12) on an outer peripheral surface of the annular rim (112),
fins (132, 133; 135, 136; 137, 138) that are extended along an axial direction (DL) of the body portion (131) on an inner peripheral surface of the body portion (131), and
a weir portion (134) that is extended on the inner peripheral surface of the body portion (131) along a circumferential direction of the body portion (131) to block air flowing along the axial direction (DL) in a state in which the wheel mounting member (13) is mounted on the wheel (11) and rotates together with the wheel (11).

2. The vehicle wheel structure (10) according to claim 1, wherein the fins (132, 133; 135, 136; 137, 138) are disposed in a pair in parallel along the circumferential direction of the body portion (131).

3. The vehicle wheel structure (10) according to claim 2, wherein the weir portion (134) is extended along the circumferential direction of the body portion (131) to connect the fins (132, 133; 135, 136; 137, 138) to each other.

4. The vehicle wheel structure (10) according to claim 3, wherein the weir portion (134) is extended to connect end portions of the fins (132, 133; 135, 136; 137, 138) on an inner side of the vehicle.

5. The vehicle wheel structure (10) according to claim 1, wherein the weir portion (134) is extended such that the axial direction (DL) and an extension direction (DW) of the weir portion (134) are orthogonal to each other.

6. The vehicle wheel structure (10) according to claim 1, wherein an extension direction (DS1, DS2) in which the fin (132, 133) is extended is inclined at an angle (θ1, θ2) toward a rotation direction of the body portion (131) with respect to the axial direction (DL) of the body portion (131).

7. The vehicle wheel structure (10) according to claim 6, wherein, in a state in which the wheel mounting member (13) is mounted on the wheel (11) and rotates together with the wheel (11), the angle (θ1, θ2) is set according to a position at which air flowing into the annular rim (112) of the wheel (11) from an inside of the vehicle to an outside of the vehicle flows out of the vehicle in the circumferential direction of the wheel (11).

8. The vehicle wheel structure (10) according to claim 7, wherein the angle (θ1, θ2) is set according to a rotation speed of the wheel mounting member (13) that generates a pressure for causing the air to flow out of the vehicle due to a centrifugal force generated by rotation.

9. The vehicle wheel structure (10) according to claim 7, wherein the angle (θ1, θ2) is set according to a dimension of an inner diameter of the wheel mounting member (13) that generates a pressure for causing the air to flow out of the vehicle due to a centrifugal force generated by rotation.

10. The vehicle wheel structure (10) according to claim 2, wherein the fins (132, 133) are extended along the axial direction (DL) such that extension directions (DS1, DS2) in which the fins (132, 133) are extended are parallel to each other.

11. The vehicle wheel structure (10) according to claim 2, wherein at least one of the fins (135, 136) is extended along the axial direction (DL) so as to be curved.

12. The vehicle wheel structure (10) according to claim 2, wherein the fins (137, 138) are extended along the axial direction (DL) such that extension directions in which the fins (137, 138) are extended intersect with each other.

13. The vehicle wheel structure (10) according to claim 12, wherein the extension directions in which the fins (137, 138) are extended intersect with each other on an outer side of the vehicle.

14. The vehicle wheel structure (10) according to any one of claims 1 to 13, wherein a pair of the fins (132, 133) and the weir portion (134) are configured to lift up the air that has flowed into the annular rim (112) from an inside of the vehicle to an outside of the vehicle downward in a vertical direction of the annular rim (112) such that the air flows out of the vehicle behind the wheel (11) in a front-rear direction of the vehicle with respect to an inflow position of the air, in a state in which the wheel mounting member (13) is mounted on the wheel (11) and rotates together with the wheel (11).

15. The vehicle wheel structure (10) according to claim 14, wherein the fins (132, 133) and the weir portion (134) are provided to correspond to air holes provided in a disk forming the wheel (11) and are configured to cause the lifted-up air to flow out of the vehicle via the air holes.
